# EUROPÄISCHE PATENTSCHRIFT

(11) **EP 0 592 995 B1**
(45) Veröffentlichungstag und Bekanntmachung des Hinweises auf die Patenterteilung: **19.06.1996**
(21) Anmeldenummer: 93116461.0
(22) Anmeldetag: 12.10.1993
(51) Int. Cl.: A01C 7/10

(54) **Sämaschine für Einzelkornsaat**
Precision seed drill
Semoir monograine

(30) Priorität: 14.10.1992 DE 4234600
(43) Veröffentlichungstag der Anmeldung: 20.04.1994
(73) Patentinhaber: Franz Kleine Maschinenfabrik GmbH & Co., D-33154 Salzkotten (DE)
(72) Erfinder: Karthaus, Franz, D - 44263 Dortmund-Hörde (DE); Romberg, Heinz Werner, Dipl.-Ing., D - 59557 Lippstadt (DE); Schulte, Reinhold, Dipl.-Ing., D - 33106 Paderborn-Elsen (DE)
(74) Vertreter: Rehberg, Elmar, Dipl.-Ing.

(56) Entgegenhaltungen:
- EP-A- 0 281 761
- GB-A- 2 217 043

## Beschreibung

Die Erfindung bezieht sich auf eine Sämaschine für Einzelkornsaat nach dem Oberbegriff der Ansprüche 1 und 2.

Solche Einzelkornsägeräte dienen insbesondere der Aussaat von Zuckerrüben und anderen Feinsämereien. Die Erfindung ist auch dann anwendbar, wenn unterschiedliche Saatgutsorten gleichzeitig ausgesät werden.

Die GB-A-2 217 043 beschreibt eine Sämaschine für Einzelkornsaat mit mehreren angetriebenen Einzelkornsägeräten sowie den weiteren in den Oberbegriffen der Ansprüche 1 und 2 wiedergegebenen Merkmale. Die Einzelkornsägeräte sind über die Arbeitsbreite auf Reihenabstand verteilt angeordnet. Für den Antrieb jeder Säscheibe ist je ein Gleichstrommotor vorgesehen. Der Antrieb des Gleichstrommotors erfolgt geschwindigkeitsabhängig über eine elektronische Steuereinrichtung in Abhängigkeit von der Vorwärtsgeschwindigkeit der Sämaschine, wobei diese Vorwärtsgeschwindigkeit durch eine Codiereinrichtung erfaßt wird. Es ist eine zentrale Steuereinrichtung mit einzelnen Steuerleitungen für die einzelnen Gleichstrommotore vorgesehen. Die Geschwindigkeit der Säscheiben soll an die Geschwindigkeit der Zugmaschine angepaßt werden. Die Drehbewegung der Scheiben soll unabhängig von anderen Parametern sein, indem die Codierscheibe funktionslos gemacht wird und der Gleichstrommotor von der Steuereinrichtung direkt gesteuert wird.

Eine weitere ähnliche Sämaschine ist aus der EP-A-0 281 761 bekannt. An einem Zentralrahmen sind mehrere nebeneinander angeordnete Einzelkornsägeräte angeordnet, welche fahrgeschwindigkeitsabhängig von einem regelbaren Antrieb angetrieben werden. Um die Voraussetzungen für eine einfache Regelmöglichkeit der Körnerausbringung einer Einzelkornsämaschine zu schaffen, ist vorgesehen, daß an der Antriebswelle der Einzelkornsägeräte ein regelbarer Antriebsmotor angeordnet ist, der als Ölmotor oder Elektromotor ausgebildet sein kann. Es ist ein Geschwindigkeitssensor vorgesehen, so daß über den regelbaren Antriebsmotor jeweils eine geschwindigkeitsabhängige Ausregelung erfolgt. Als Führungsgröße wird die Fahrgeschwindigkeit benutzt. Der Ist-Wert wird durch die Körnerzahl wiedergegeben. Dies ist insofern nachteilig, als sich eine durchaus erhebliche Ungenauigkeit hinsichtlich des Säabstandes ergeben kann.

Eine weitere Sämaschine ist aus dem Prospekt der Anmelderin "UNICORN-3 Einzelkornsägeräte" bekannt. Der Antrieb erfolgt über mindestens zwei Laufräder, die als Wegsensoren fungieren. Es ist ein nachgeschaltetes Getriebe vorgesehen, mit dem es möglich ist, die Säabstände in Stufen zu verändern. Der Antrieb wird mit Hilfe einer über die Arbeitsbreite durchgehenden Transmissionswelle auf die einzelnen Einzelkornsämaschinen verteilt. Statt des Getriebes mit vorzugsweise sechs Schaltstufen kann auch ein stufenloses Getriebe vorgesehen sein.

Der Antrieb der Einzelkornsägeräte bei der aus dem Prospekt bekannten Sämaschine ist insofern mit Nachteilen behaftet, als zwischen den zwei Laufrädern Schlupf entstehen kann, der sich in einer Ungenauigkeit im Säabstand äußert. Weiterhin ist der Säabstand nur in einem begrenzten Abstandsbereich stufenweise veränderbar. Der Antrieb der Einzelkornsägeräte ist auch vergleichsweise aufwendig gestaltet, da zu jedem Einzelkornsägerät eine Antriebsübertragung erforderlich ist. Hierbei können Ketten und ähnliche Übertragungsmittel eingesetzt werden, die bei Verschleiß die Ursache von Ausfällen sein können. Die bekannte Sämaschine mit ihren Einzelkornsägeräten läßt keine Fahrgassenschaltung und keine Teilbreitenausschaltung zu, wie es an sich wünschenswert wäre.

Der Erfindung liegt die Aufgabe zugrunde, eine Sämaschine der eingangs beschriebenen Art derart weiterzubilden, daß eine einfache Einstellbarkeit gleicher oder ungleicher Säabstände mehrere Einzelkornsägeräte zueinander möglich wird. Dabei kann es auch um die gleichzeitige Ausbringung unterschiedlicher Saatgutsorten gehen. Auch muß eine Fahrgassenschaltung und eine Teilbreitenausschaltung einfach realisierbar sein.

Erfindungsgemäß wird dies bei der Sämaschine der eingangs beschriebenen Art dadurch erreicht, daß ein Wegsensor zum Erfassen des Fahrweges vorgesehen ist, daß die zentrale Steuereinrichtung einen oder mehrere stufenlos verstellbare Proportionalregler zur Verarbeitung der von dem Wegsensor abgegebenen Wegimpulse in Ansteuerimpulse für die Gleichstrommotoren aufweist, und daß jedes Einzelkornsägerät einen Drehimpulsgeber und einen eigenen Regelkreis zur reproduzierbaren Einhaltung eines eingestellten Säabstandes aufweist.

Bei einer weiteren erfindungsgemäßen Sämaschine ist ein Wegsensor zum Erfassen des Fahrweges und als Antrieb jedes Einzelkornsägerätes je ein Schrittmotor vorgesehen, wobei die zentrale Steuereinrichtung für die einzelnen Schrittmotoren einen oder mehrere stufenlos verstellbare Proportionalregler zur Verarbeitung der von dem Wegsensor abgegebenen Wegimpulse in Ansteuerimpulse für die Schrittmotoren aufweist.

Bei diesen beiden Lösungen wird der Fahrweg als Führungsgröße benutzt. In Abhängigkeit von der Zurücklegung eines bestimmten Weges wird ein Säkorn abgelegt. Durch die Abhängigkeit von dem Fahrweg wird gegenüber einer Abhängigkeit von der Fahrgeschwindigkeit vergleichsweise früher eingegriffen und eine verbesserte Ablagegenauigkeit erreicht. Durch Verwendung der Elektroantriebe als Einzelantriebe der Einzelkornsägeräte läßt es sich sehr einfach erreichen, einzelne Einzelkornsägeräte stillzusetzen, um z. B. eine Fahrgassenschaltung oder eine Teilbreitenausschaltung zu realisieren. Auch unterschiedliche Säabstände in den einzelnen Reihen sowie die stufenlose Veränderung der Säabstände in einem relativ großen Bereich sind möglich, ohne daß es eines besonderen Aufwandes bedarf.

Jeder Elektroantrieb kann einen Gleichstrommotor mit Drehimpulsgeber und eigenem Regelkreis aufweisen. Es ist dann direkt an dem einzelnen Einzelkornsägerät ein Regelkreis realisiert, der einen Regler, den Gleichstrommotor und den Drehimpulsgeber beinhaltet, so daß auf diese Art und Weise eine Regelschleife gelegt ist, in der je nach der Einstellung der jeweilige Säabstand reproduzierbar eingehalten wird.

Die andere Realisierungsmöglichkeit des Elektroantriebs besteht darin, daR dieser als Schrittmotor ausgebildet ist. Dies hat den Vorteil, daß durch die Genauigkeit des Schrittmotors die Anordnung eines Regelkreises entbehrlich wird und damit eine direkte Ansteuerung über die zentrale Steuereinrichtung möglich ist.

Die Steuereinrichtung kann eine Schalteinrichtung zum getrennten Schalten jeder Steuerleitung aufweisen, so daß auch leicht während der Arbeit einzelne Einzelkornsägeräte stillgesetzt oder im Säabstand verändert werden können.

In beiden Fällen kann zwischen dem elektromotorischen Antrieb und dem Vereinzelungsorgan des Einzelkornsägeräts eine Getriebestufe vorgesehen sein. Eine solche Getriebestufe läßt sich unmittelbar vor dem Vereinzelungsorgan geschickt unterbringen und verbessert noch einmal die Genauigkeit der Ablage der Samenkörner.

Als Wegsensor kann ein Radimpulsgeber oder ein Radarimpulsgeber vorgesehen sein, der mit der Steuereinrichtung verbunden ist. Ein Radimpulsgeber läßt sich ohne Weiteres im Bereich eines Laufrads realisieren. Ein Radarimpulsgeber wird zweckmäßig am Rahmen der Sämaschine angeordnet.

Es kann eine mit der Steuereinrichtung verbundene Ein- und Ausgabeeinheit zum Einstellen und Überwachen des Säabstands in jeder Reihe vorgesehen sein. Es versteht sich, daß diese Ein- und Ausgabeeinheit auf dem Schlepper angeordnet werden kann, so daß sie auch während der Fahrt verstellt und überwacht werden kann.

Der vom Schlepper mit Strom versorgten Steuereinrichtung kann eine Pufferbatterie zum Abfangen der Stromspitzen beim Anfahren zugeordnet sein.

Die Steuerleitung jedes elektromotorischen Antriebs jedes Einzelkornsägeräts kann aus einem Versorgungskabel und einer Datenleitung bestehen, um einerseits den erforderlichen Antrieb sicherzustellen und andererseits die notwendigen Daten an die zentrale Steuereinheit und ggf. an die Ein- und Ausgabeeinheit weiterzuleiten.

Die Steuerleitung jedes elektromotorischen Antriebs kann im Fall der Verwendung eines Schrittmotors zur schrittmotorspezifischen Stromversorgung ausgebildet sein.

Die Erfindung wird anhand zweier bevorzugter Ausführungsbeispiele, die in den Zeichnungen dargestellt sind, weiter beschrieben und erläutert. Es zeigen:
- Figur 1: eine Draufsicht auf die wesentlichen Teile der Sämaschine in einer ersten Ausführungsform,
- Figur 2: eine Draufsicht auf die wesentlichen Teile der Sämaschine in einer zweiten Ausführungsform,
- Figur 3: eine Darstellung des Elektroantriebs mit Gleichstrommotor und Regelkreis an einem einzelnen Einzelkornsägerät und
- Figur 4: die Darstellung des Elektroantriebs unter Verwendung eines Schrittmotors an einem Einzelkornsägerät.

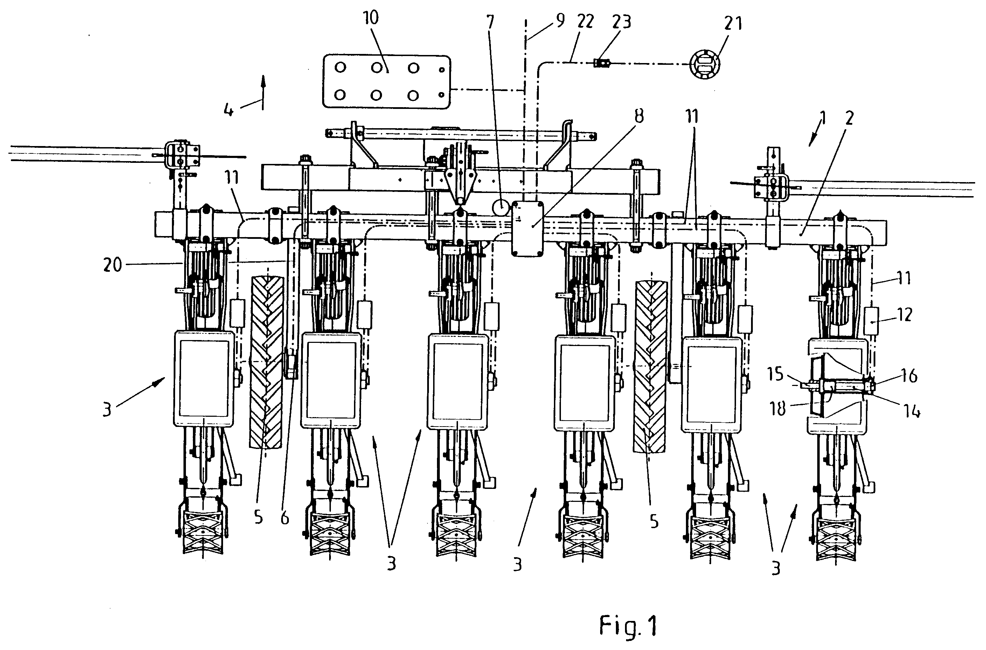

Die in Figur 1 dargestellte Sämaschine 1 weist einen Rahmen 2 auf, der sich über die Arbeitsbreite erstreckt und an dem die Einzelkornsägeräte 3 in dem gewünschten Reihenabstand angeordnet sind. Es sind hier sechs Einzelkornsägeräte mit gleichem Reihenabstand montiert. Die Arbeitsrichtung der Sämaschine 1 ist durch Pfeil 4 gekennzeichnet. Die Sämaschine mit ihrem Rahmen 2 ist auf zwei Laufrädern 5 abgestützt, wobei das eine Laufrad 5 mit einem Radimpulsgeber 6 ausgestattet ist. Statt des Radimpulsgebers 6 kann auch zentral ein Radarimpulsgeber 7 vorgesehen sein.

Es ist eine zentrale Steuereinrichtung 8 vorgesehen, die zweckmäßig entsprechend der Anzahl der Einzelkornsägeräte Proportionalregler beinhaltet. Über eine Leitung 9 wird die zentrale Steuereinrichtung 8 vom Schlepper mit Strom versorgt. Es ist eine Pufferbatterie 10 zum Abfangen der Stromspitzen auf der Sämaschine 1 vorgesehen.

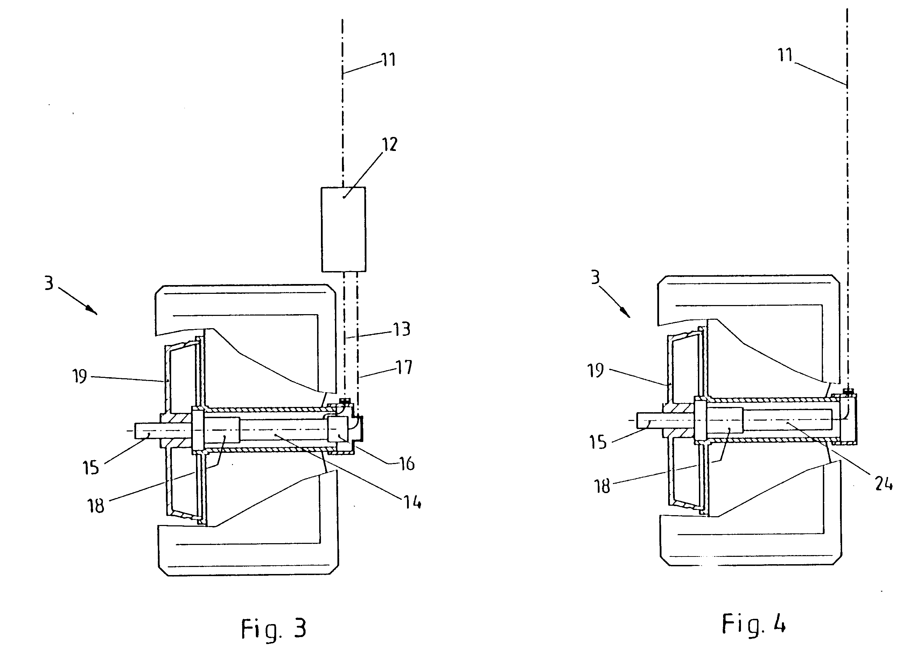

Von der zentralen Steuereinrichtung 8 führt je eine Steuerleitung 11 zu je einem Regler 12 an je einem Einzelkornsägerät. Vom Regler 12 führt eine Leitung 13 (Figur 3) zu einem Gleichstrommotor 14, der als elektrisches Antriebselement wirkt und auf der Antriebswelle 15 jedes Einzelkornsägeräts 3 angeordnet ist. Gleichachsig ist jeweils noch ein Drehimpulsgeber 16 vorgesehen, von dem eine Rückleitung 17 zum Regler 12 führt, so daß hier an jedem Einzelkornsägerät ein geschlossener Regelkreis gebildet ist, dessen Aufgabe es ist, entsprechend den über die Steuerleitung 11 eingesteuerten Impulsen den jeweiligen Säabstand konstantzuhalten bzw. zu reproduzieren. Zwischen dem Gleichstrommotor 14 und der Antriebswelle 15 kann noch eine Getriebestufe 18 vorgesehen sein. Auf der Antriebswelle 15 sitzt dann ein Vereinzelungsorgan 19, welches in bekannter Weise ausgebildet sein kann. Eine Leitung 20 führt von dem Radimpulsgeber 6 zu der zentralen Steuereinheit 8. Weiterhin ist eine Ein- und Ausgabeeinheit 21 vorgesehen, die über eine Leitung 22 mit der zentralen Steuereinrichtung 8 verbunden ist. Bekannte Verbindungsstecker 23 sind in der Leitung 22 vorgesehen, um die Sämaschine von dem Schlepper entkuppeln zu können.

Über die in der zentralen Steuereinheit 8 enthaltenen Proportionalregler, die von der Ein- und Ausgabeeinheit 21 her einzeln angesteuert werden können, ist es in einfacher Weise möglich, gleiche oder ungleiche Säabstände einzustellen und einzuhalten, auch die komplette Stillsetzung einzelner Einzelkornsägeräte, wie dies bei einer Fahrgassenschaltung oder einer Teilbreitenausschaltung erforderlich ist.

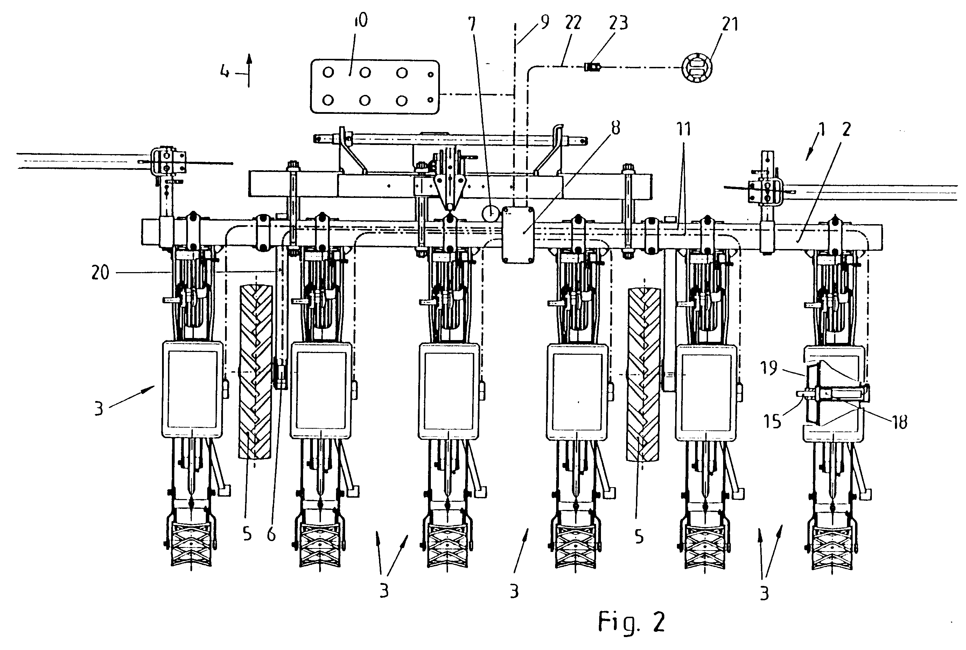

In den Figuren 2 und 4 ist eine zweite Ausführungsform verdeutlicht. Zur Beschreibung der wesentlichen Einzelheiten kann auf das Ausführungsbeispiel der Figuren 1 und 3 verwiesen werden. Als Elektroantrieb dient hier jedoch ein Schrittmotor 24, zu dem die einzelne Steuerleitung 11 direkt geführt ist. Ein eigener Regelkreis kommt deshalb in Fortfall. Die zentrale Steuereinrichtung 8 ist auch hier mit einer entsprechenden Anzahl Proportionalreglern ausgestattet. Die Genauigkeit eines Schrittmotors 24 wird hier ausgenutzt, um einerseits die Säabstände reproduzierbar einzuhalten und andererseits eine Regelschleife zu vermeiden.

### Bezugszeichenliste:

- 1: = Sämaschine
- 2: = Rahmen
- 3: = Einzelkornsägerät
- 4: = Pfeil
- 5: = Laufrad
- 6: = Radimpulsgeber
- 7: = Radarimpulsgeber
- 8: = Steuereinrichtung
- 9: = Leitung
- 10: = Pufferbatterie
- 11: = Steuerleitung
- 12: = Regler
- 13: = Leitung
- 14: = Gleichstrommotor
- 15: = Antriebswelle
- 16: = Drehimpulsgeber
- 17: = Rückleitung
- 18: = Getriebestufe
- 19: = Vereinzelungsorgan
- 20: = Leitung
- 21: = Ein- und Ausgabeeinheit
- 22: = Leitung
- 23: = Verbindungsstecker
- 24: = Schrittmotor

## Patentansprüche

1. Sämaschine für Einzelkornsaat mit mehreren angetriebenen Einzelkornsägeräten (3), die über die Arbeitsbreite auf Reihenabstand verteilt angeordnet sind und jeweils einen eigenen elektromotorischen Antrieb in Form eines Gleichstrommotors (14) aufweisen, wobei eine zentrale Steuereinrichtung (8) mit einzelnen elektrischen Steuerleitungen (11) für die einzelnen Gleichstrommotore (14) vorgesehen ist, **dadurch gekennzeichnet**, daß ein Wegsensor zum Erfassen des Fahrweges vorgesehen ist, daß die zentrale Steuereinrichtung (8) einen oder mehrere stufenlos verstellbare Proportionalregler zur Verarbeitung der von dem Wegsensor abgegebenen Wegimpulse in Ansteuerimpulse für die Gleichstrommotoren (14) aufweist, und daß jedes Einzelkornsägerät einen Drehimpulsgeber (16) und einen eigenen Regelkreis zur reproduzierbaren Einhaltung eines eingestellten Säabstandes aufweist.

2. Sämaschine für Einzelkornsaat mit mehreren angetriebenen Einzelkornsägeräten, die über die Arbeitsbreite auf Reihenabstand verteilt angeordnet sind und jeweils einen eigenen elektromotorischen Antrieb aufweisen, wobei eine zentrale Steuereinrichtung (8) mit einzelnen elektrischen Steuerleitungen (11) für die einzelnen Elektromotore vorgesehen ist, **dadurch gekennzeichnet**, daß ein Wegsensor zum Erfassen des Fahrweges und als Antrieb jedes Einzelkornsägerätes (3) je ein Schrittmotor (24) vorgesehen ist, und daß die zentrale Steuereinrichtung (8) für die einzelnen Schrittmotoren (24) einen oder mehrere stufenlos verstellbare Proportionalregler zur Verarbeitung der von dem Wegsensor abgegebenen Wegimpulse in Ansteuerimpulse für die Schrittmotoren (24) aufweist.

3. Sämaschine nach Anspruch 1 oder 2, **dadurch gekennzeichnet**, daß die Steuereinrichtung (8) eine Schalteinrichtung zum getrennten Schalten jeder Steuerleitung (11) aufweist.

4. Sämaschine nach Anspruch 1 oder 2, **dadurch gekennzeichnet**, daß jeweils zwischen dem elektromotorischen Antrieb und dem Vereinzelungsorgan (19) des Einzelkornsägeräts (3) eine Getriebestufe (18) vorgesehen ist.

5. Sämaschine nach Anspruch 1 oder 2, **dadurch gekennzeichnet**, daß als Wegsensor ein Radimpulsgeber (6) vorgesehen ist, der mit der Steuereinrichtung (8) verbunden ist.

6. Sämaschine nach Anspruch 1 oder 2, **dadurch gekennzeichnet**, daß eine mit der Steuereinrichtung (8) verbundene Ein- und Ausgabeeinheit (21) zum Einstellen und Überwachen des Säabstands in jeder Reihe vorgesehen ist.

7. Sämaschine nach Anspruch 1 oder 2, **dadurch gekennzeichnet**, daß der vom Schlepper mit Strom versorgten Steuereinrichtung (8) eine Rufferbatterie (10) zum Abfangen der Stromspitzen beim Anfahren zugeordnet ist.

8. Sämaschine nach Anspruch 1, **dadurch gekennzeichnet**, daß die Steuerleitung (11) jedes elektromotorischen Antriebs jedes Einzelkornsägeräts aus einem Versorgungskabel und einer Datenleitung besteht.

9. Sämaschine nach Anspruch 2, **dadurch gekennzeichnet**, daß die Steuerleitung (11) jedes elektromotorischen Antriebs zur schrittmotorspezifischen Stromversorgung ausgebildet ist.

## Claims

1. Precision seed drill having a number of driven seed units (3) Positioned across the working width with respect to the distances between adjacent rows and comprising a d.c. motor (14) each as an electric motor drive, whereby a central control device (8) is provided having single electrical lines (11) leading to the single d.c. motors (14), **wherein** a path sensor is provided to detect the driving distance, the central control device (8) comprises one or more of continuously variable proportional controllers to convert the pulses according the path generated by the path sensor into control pulses for the d.c. motors (14), and each seed unit (3) comprises a pulse generator (16) and a closed control loop in order to reproducibly keep an adjusted seed distance in the row.

2. Precision seed drill having a number of driven seed units (3) positioned across the working width with respect to the distances between adjacent rows and comprising an electric motor drive, whereby a central control device (8) is provided having single electrical lines (11) leading to the electrical motors, **wherein** a path sensor is provided to detect the driving distance and a stepping motor (24) is provided as a drive for each seed unit (3), and the central control device (8) of the stepping motors (24) comprises one or more of continuously variable proportional controllers to convert the pulses according the path generated by the path sensor into control pulses for the stepping motors (24).

3. Precision seed drill of claim 1 or 2, **wherein** the control device (8) comprises a switching mechanism to shift each control line (11) separately.

4. Precision seed drill of claim 1 or 2, **wherein** a gear (18) is provided between the electric motor drive and the thin out element (19) of each seed unit (3).

5. Precision seed drill of claim 1 or 2, **wherein** a wheel pulse generator (6) is provided as a path sensor and being connected with the control device (8).

6. Precision seed drill of claim 1 or 2, **wherein** an input and output device (21) connected with the control device (8) is provided in order to adjust and survey the seed distance in each row.

7. Precision seed drill of claim 1 or 2, **wherein** a buffer battery (10) is assigned to the control device (8) supplied with current via the tractor to cut the current peaks during the driving start.

8. Precision seed drill of claim 1, **wherein** the control line (11) of each electric motor drive of each seed unit consists of a supply cable and a data line.

9. Precision seed drill of claim 2, **wherein** the control line (11) of each electric motor drive is designed in order to current supply with respect to the use of stepping motors.

## Revendications

1. Semoir pour semis monograine comportant plusieurs appareils à semer monograine (3), qui sont répartis sur la largeur de travail suivant l'écartement des rangées, et comportent chacun leur propre entraînement électromotorisé sous forme d'un moteur à courant continu (14), un dispositif de commande central (8) avec des lignes de commande électriques (11) individuelles étant prévu pour les différents moteurs à courant continu (14), caractérisé en ce qu'un capteur de distance est prévu pour détecter la distance parcourue, en ce que le dispositif de commande central (8) comporte un ou plusieurs régulateurs proportionnels, réglables en continu, pour le traitement des impulsions de distance, délivrées par le capteur de distance, en impulsions de commande pour les moteur à courant continu (14), et en ce que chaque appareil à semer monograine comporte un transmetteur d'impulsions de rotation (16) et son propre circuit de régulation pour le respect reproductible d'une distance de semis réglée.

2. Semoir pour semis monograine comportant plusieurs appareils à semer monograine, qui sont répartis sur la largeur de travail, suivant l'écartement des rangées, et comportent chacun leur propre entraînement électromotorisé, un dispositif de commande central (8) avec des lignes de commande électriques (11) individuelles étant prévu pour les différents moteurs électriques, caractérisé en ce qu'il est prévu un capteur de distance pour détecter la distance parcourue et comme entraînement de chaque appareil à semer monograine (3), un moteur pas à pas (24), et en ce que le dispositif de commande central (8) pour les différents moteurs pas à pas (24) comporte un ou plusieurs régulateurs proportionnel s réglables en continu pour le traitement des impulsions de distance, délivrées par le capteur de distance, en impulsions de commande pour les moteurs pas à pas (24).

3. Semoir selon la revendication 1 ou 2, caractérisé en ce que le dispositif de commande (8) comporte un dispositif de commutation pour la commutation séparée de chaque ligne de commande (11).

4. Semoir sel on la revendication 1 ou 2, caractérisé en ce qu'entre l'entraînement électromotorisé et l'organe éclaircisseur (19) de l'appareil à semer monograine (3), il est prévu un étage de transmission (18).

5. Semoir sel on la revendication 1 ou 2, caractérisé en ce qu'il est prévu comme capteur de distance un transmetteur d'impulsions de roue (6), qui est relié au dispositif de commande (8).

6. Semoir selon la revendication 1 ou 2, caractérisé en ce qu'une unité d'entrée et de sortie (21), reliée au dispositif de commande (8), est prévue pour le réglage et la surveillance de la distance de semis dans chaque rangée.

7. Semoir selon la revendication 1 ou 2, caractérisé en ce qu'au dispositif de commande (8), alimenté en courant par le tracteur, est associée une batterie tampon (10) pour absorber les pointes de courant au démarrage.

8. Semoir selon la revendication 1, caractérisé en ce que la ligne de commande (11) de chaque entraînement électromotorisé de chaque appareil à semer monograine est constituée d'un câble d'alimentation et d'une ligne de données.

9. Semoir selon la revendication 2, caractérisé en ce que la ligne de commande (11) de chaque entraînement électromotorisé est conçue pour l'alimentation en courant spécifique au moteur pas à pas.
